Europäisches Patentamt

European Patent Office

Office européen des brevets

(19)

(11) Veröffentlichungsnummer: **0 218 126**
**B1**

# (12) EUROPÄISCHE PATENTSCHRIFT

(45) Veröffentlichungstag der Patentschrift: 23.05.90

(21) Anmeldenummer: **86112863.5**

(22) Anmeldetag: **17.09.86**

(51) Int. Cl.⁵: **G 01 F 1/66**

(54) **Verfahren zur Messung von Strömungsgeschwindigkeiten mit Ultraschallschwingungen.**

(30) Priorität: 30.09.85 DE 3534869

(43) Veröffentlichungstag der Anmeldung:
15.04.87 Patentblatt 87/16

(45) Bekanntmachung des Hinweises auf die
Patenterteilung:
23.05.90 Patentblatt 90/21

(84) Benannte Vertragsstaaten:
CH DE FR LI SE

(56) Entgegenhaltungen:
EP-A-0 007 782
FR-A-2 332 536
US-A-4 265 125

(73) Patentinhaber: **Siemens Aktiengesellschaft**
**Wittelsbacherplatz 2**
**D-8000 München 2 (DE)**

(72) Erfinder: **Magori, Valentin, Dipl.-Phys.**
**Limburgstrasse 17**
**D-8000 München 90 (DE)**

Courier Press, Leamington Spa, England.

**Beschreibung**

Die vorliegende Erfindung betrifft ein Verfahren zur Messung von Strömungsgeschwindigkeiten mit Ultraschallschwingungen, zu dessen Durchführung eine Vorrichtung vorgesehen ist, bei der eine erste und eine zweite aus je einem Sende- und je einem Empfangswandler bestehende Ultraschallmeßstrecke angeordnet sind und bei der sich jeweils eine zur Strömungsrichtung parallel orientierte Ausbreitungskomponente der Ultraschallschwingungen in Strömungsrichtung bzw. gegen die Strömungsrichtung einstellt.

Aus der DE—OS 28 28 937 sind ein derartiges Verfahren und eine Vorrichtung zum Messen von Strömungsgeschwindigkeiten mit Hilfe von Ultraschallschwingungen bekannt, auf die das neuartige Verfahren gemäß der vorliegenden Erfindung anwendbar ist.

Aus der EP—A—0007782 ist eine Flüssigkeitsströmungs-Meßvorrichtung bekannt, die zwei Ultraschallwandler umfaßt, zwischen denen ein Ultraschallstrahl durch die Flüssigkeit übertragen wird. Der Ultraschallstrahl wird mittels einer Tonfrequenz moduliert, und die Beziehung zwischen der Frequenz oder der Phase des empfangenen Modulationssignals und derjenigen des gesendeten Modulationssignals ergibt ein Maß für die Strömungsgeschwindigkeit der Flüssigkeit. Es werden vorzugsweise Ultraschallstrahlen in zwei einander entgegengesetzten Richtungen ausgesendet, wobei die Wandler abwechselnd durch entsprechende Umschaltungen als Sender oder Empfänger arbeiten. Die Messung erfolgt durch Berechnung der zwei sich ergebenden Beziehungen.

Der vorliegenden Erfindung liegt die Aufgabe zugrunde, ein Verfahren der eingangs genannten Art zu schaffen, das gegenüber bekannten Verfahren eine Steigerung der erzielbaren Meßgenauigkeit, eine Erweiterung des Meßbereiches sowie eine Vereinfachung der zur Durchführung erforderlichen Schaltungstechnik ermöglicht.

Die der Erfindung zugrundeliegende Aufgabe wird durch ein Verfahren der eingangs genannten Art und gemäß dem Oberbegriff des Patentanspruchs 1 gelöst, das durch die in dem kennzeichnenden Teil des Patentanspruchs 1 angegebenen Merkmale charakterisiert ist.

Zur Lösung der genannten Aufgabe wird gemäß einer zweiten Ausführungsform ein Verfahren nach dem Oberbegriff des Patentanspruchs 4 vorgeschlagen, das erfindungsgemäß durch die im kennzeichnenden Teil dieses Patentanspruchs angegebenen Merkmale charakterisiert ist.

Vorteilhafte Weiterbildungen sind durch die in den abhäugegen Ansprüchen angegebenen Merkmale gekennzeichnet.

Im folgenden wird die Erfindung anhand mehrerer Figuren beschrieben.

Fig. 1 zeigt schematisch eine Meßstrecke in einem Strömungskanal oder Meßrohr.

Fig. 2 zeigt zwei Diagramme betreffend die Signalübertragung und die Frequenzabhängigkeit einer derartigen Meßstrecke nach den bekannten Lambda-Locked-Loop —Verfahren.

Fig. 3 zeigt ein Blockschaltbild einer Schaltungsanordnung, mittels derer das erfindungsgemäße Verfahren durchgeführt werden kann.

Kennzeichnend für das neue Verfahren ist, daß die jeweiligen Sendesignale in einem für die Wandler und ihre Anordnung gungneten Frequenzbereich repetierend frequenzmoduliert werden, daß fortlaufend die jeweiligen momentanen Werte der Sendefrequenz und der dazugehörigen Empfangsphase gemessen werden und daß aus diesen Werten der Reziprokwert der Phasensteiheit $df/d\varnothing$ gebildet wird. Die Differenz der Reziprokwerte der Phasensteiheit in und gegen Strömungsrichtung ist ein genauer, vom Wert der Schallgeschwindigkeit unabhängiger Wert für die Strömungsgeschwindigkeit. Da die Phase bei vielen verschiedenen Frequenzen gemessen wird, können lokale Störungen der Phasenkennlinie (z.B. durch parasitäre Schallanteile, Resonanzeffekte der Wandler, Nichtlinearitäten der Phasendetektoren), die sonst genauigkeitsmindernd wirken, durch Mittelung oder durch Ausgleichsverfahren eliminiert werden.

Schaltungstechnisch bedeutsam ist bei dem erfindungsgemäßen Verfahren, daß im Gegensatz zu dem bekannten Lambda-Locked-Loop (LLL) — Verfahren keine Regelung mehr erforderlich ist und daß die Signalauswertung bei minimalem Aufwand auf der analogen Seite mit Mikroprozessoren vorgenommen werden kann.

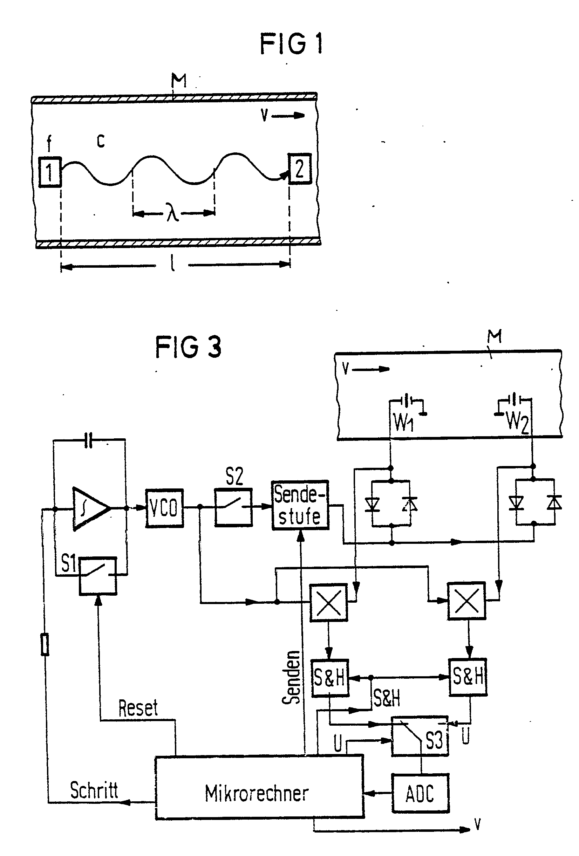

Die Funktion des Verfahrens sei an Fig. 1 erlaütert:

In der Figur bezeichnen:

c    Schallgeschwindigkeit

v    Fließgeschwindigkeit

$\lambda$    Schall-Wellenlänge

1, 2 Ultraschallwandler

l    Länge der meßstrecke

f    Schallfrequenz

M    Meßrohr

Für die Anzahl N der Wellenlängen auf der Meßstrecke sowie für die totale Phasenwinkeldifferenz $\varnothing$ zwischen Sende und Empfangssignal gilt:

2

$$N = \frac{I}{\lambda} = \frac{I \cdot f}{C \pm V}$$

[1]

$$\emptyset = 2\pi N = \frac{2\pi \cdot I \cdot f}{C \pm V}$$

[2]

Für die Reziprokwerte der Phasensteilheit df/d∅ bei Durchschallung in und gegen Strömungsrichtung ergibt sich:

$$\left(\frac{df}{d\Phi}\right)^{\rightarrow} = \frac{C + V}{2\pi \cdot I} \;;\; \left(\frac{dt}{d\phi}\right)^{\leftarrow} = \frac{C - V}{2\pi \cdot I}$$

[3]

Die Differenz dieser Werte ist ein Maß für die Strömungsgeschwindigkeit:

$$V = \pi \cdot I \left[\left(\frac{df}{d\emptyset}\right)^{\rightarrow} - \left(\frac{df}{d\emptyset}\right)^{\leftarrow}\right]$$

[4]

Phasendetektoren messen nicht den totalen, sondern einen inkrementalen Phasenwinkel γ; je nach Phasendetektor gilt:

[5]

$$\phi = \emptyset \bmod 2\pi \text{ oder } \phi = \emptyset \bmod \pi$$

Eine einfache Überlegung zeigt, daß auch die Auswertung des inkrementalen Phasenwinkels stückweise zu identischen Werten für den Reziprokwert der Phasensteilheit führt und entsprechend den richtigen Wert für die Strömungsgeschwindigkeit liefert:

$$V = \pi \cdot I \left[\left(\frac{df}{d\phi}\right)^{\rightarrow} - \left(\frac{df}{d\phi}\right)^{\leftarrow}\right]$$

[4a]

Die bisherigen Überlegungen gehen von punktförmigen Wandlern aus. Bei flächenhaften Wandlern gilt der Zusammenhang zwischen den Differenzen der reziproken Phasensteilheit qualitativ ebenfalls, die Proportionalitätskonstante K ist empirisch zu bestimmen.

$$V = K \left[\left(\frac{df}{d\phi}\right)^{\rightarrow} - \left(\frac{df}{d\phi}\right)^{\leftarrow}\right]$$

[4b]

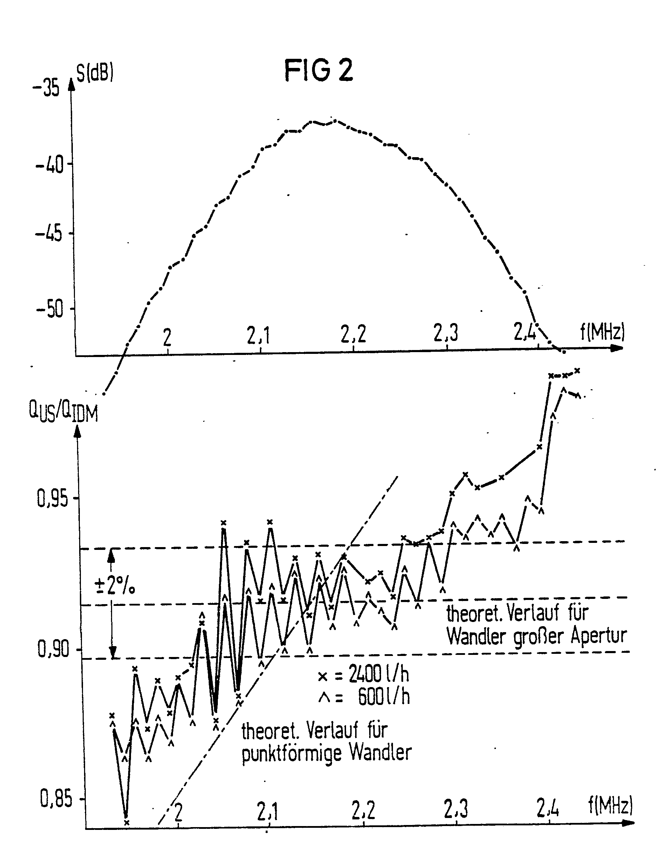

Eine alternative Auswertemethode des erfindungsgemäßen Verfahrens besteht darin, aus den aufgenommenen Meßwerten von Frequenz und Phase die Frequenzen für eine vorgegebene Phase (vorzugsweise φ = O) zu errechnen. Diese Frequenzen wären dieselben, auf die beim LLL-Verfahren eingerastet wird. Entsprechend sind, wie in der DE—A—28 28 937 beschrieben, die Differenzen dieser Frequenzen in und gegen Strömungsrichtung ein Maß für die Strömungsgeschwindigkeit. Meßtechnisch ist das Vorliegen vieler "Quasi-LLL-Frequenzen" vorteilhaft: Durch Mittelung werden zufällige Streuungen verkleinert. Dies gilt auch für die in einem bereits zuvor vorgeschlagenen Verfahren in Betracht gezogenen systematischen Streuungen (Fig. 2).

Fig. 2 zeigt zwei Diagramme:

den Verlauf des Signalübertragungsmaßess aufgetragen über der Frequenz einer Meßstrecke mit 3-facher Reflexion, im vorliegenden Fall mit dem Material "PVC", dem Innendurchmesser 2 cm, der maximalen Durchströmungsrate 3500 1/h, einem Interdigitalwandler mit NiAg-Beschichtung mit einer aktiven Fläche von 9 × 12 mm, einer Dicke von 360 µm, mit "Stabilit-Express" verklebt in einer PVC-Halterung mit 1 mm-Frontmembran,

die Frequenzabhängigkeit einer Meßstrecke mit Interdigitalwandlern bei der US-Durchflußmessung mit dem LLL-Verfahren, wobei in das Diagramm der theoretische Verlauf für punktförmige Wandler bzw. der theoretische Verlauf für Wandler großer Apertur für eine Durchflußmenge 2400 l/h bzw. 600 l/h eingetragen ist.

Die Form der Frequenzmodulation ist an sich irrelevant, allerdings führt eine lineare (oder allgemein stetig steigende bzw. fallende) Frequenzmodulation FM dazu, daß für das zeitlich verzögerte Empfangssignal kein gleichfrequentes, sondern ein inzwischen frequenzverschobenes Referenzsignal zur Verfügung steht. Daraus resultiert eine zusätzliche Phasensteilheit, die sich zu der durch den Laufweg verursachten addiert. Da diese zusätzliche Phasensteilheit aber in beiden Richtungen in gleicher Weise wirksam wird, wird sie bei der Differenzbildung eliminiert.

Bei gepulstem Betrieb kann diese zusätzliche Phasensteilheit durch treppenförmige Frequenzmodulation vermieden werden, bei der die Frequenz während der Laufzeit auf der Meßstrecke konstant bleibt. Eine treppenförmige FM ergibt sich z.B. durch die Digitalisierungsschritte beim Durchfahren des Frequenzbereiches eines digital gesteuerten Frequenzsynthesizers. In Analogtechnik könnte die stufenweise Verstimmung durch eine Steuerspannung für einen spannungsgesteuerten Oszillator VCO erfolgen, welche durch Integration von Impulsen gewonnen wird (vergl. Fig. 3). Für den Ablauf der Ultraschallsignale sind die bei den LLL-Verfahren diskutierten Methoden wie Kommutierung von CW-Signalen mit Relais oder elektronischen Schaltern oder Burst-Verfahren anwendbar. Besonders günstig sind die Simultan-Burst-Verfahren, bei denen, wie Bereits an anderer Stelle beschrieben, gleichzeitig mit beiden Wandlern Ultraschall-Bursts abgestrahlt werden. Die Phasenwerte beider Empfangssignale (bezogen auf das Sendesignal) sind dabei vorteilhafterweise in einen Mikrorechner zu übernehmen.

Die jeweilige Frequenz ist entweder ebenfalls zu übernehmen oder sie könnte, da die Verstimmung in festen Schritten erfolgt, aus der Schrittweite und Anzahl der bereits erfolgten Schritte bestimmt werden. .

Fig. 3 zeigt, wie bereits erläutert, ein Blockschaltbild einer Schaltungsanordnung, mittels derer das erfindungsgemäße Verfahren durchgeführt werden kann.

Die Ablaufsteuerung wird von einem Mikrorechner getätigt, der auch die Auswertung vornimmt. Durch von dem Mikrorechner gelieferte kurze Impulse steigt die Ausgangsspannung eines Integrators treppenförmig an. Dadurch wird an einem spannungsgesteuerten Oszillator VCO eine treppenförmige Frequenzmodulation bewirkt. Die Rücksetzung des Integrators erfolgt durch einen "Reset"-Impuls. Zur Aussendung der Bursts wird das Ausgangssignal des VCO über einen Schalter 52 auf eine Sendestufe durchgeschaltet. Die Empfangsignale und das VCO-Signal als Referenz werden Phasendetektoren zugeführt. Deren Signal wird während des Empfangs in "Sample and Hold"-Stufen gespeichert und anschließend nacheinander (Umschalter 53) digitalisiert und in den Mikrorechner eingegeben.

Zusätzlich bietet das erfindungsgemäße Meßverfahren die Möglichkeit, individuell für jedes Meßrohr Apparatekonstanten in einem PROM des Mikrorechners abzulegen. Speziell ist es auf diese Weise möglich, eine während der notwendigen Kalibrierung ermittelte Konstante K (vergl./4b/) und evtl. auftretende Abweichungen abzuspeichern und später im Meßbetrieb zur Steigerung der Genauigkeit zu benutzen.

Das Verfahren gemäß der vorliegenden Erfindung bietet gegenüber dem Stand der Technik folgende Vorteile:

— Steigerung der Meßgenauigkeit
— Erweiterung des Meßbereichs
— Vereinfachung der Schaltungstechnik
— Unabhängigkeit von der Schallgeschwindigkeit
— Erhöhung der Auflösung

**Patentansprüche**

1. Verfahren zur Messung von Strömungsgeschwindigkeiten mit Ultraschallswingungen, zu dessen Durchführung eine Vorrichtung vorgesehen ist, bei der eine erste und eine zweite aus je einem Sende- und je einem Empfangswandler bestehende Ultraschallmeßstrecke angeordnet sind und bei der sich jeweils eine zur Strömungsrichtung parallel orientierte Ausbereitungskomponente der Ultraschallschwingungen in Strömungsrichtung bzw. gegen die Strömungsrichtung einstellt, dadurch gekennzeichnet,

— daß die jeweiligen Sendesignale in einem für die Wandler und ihre Anordnung geeigneten Frequenzbereich repetierend frequenzmoduliert werden,

— daß fortlaufend die jeweiligen momentanen Werte der Sendefrequenz φ und der dazugehörigen Empfangsphase gemessen werden,

— daß aus den gemessenen Werten der Reziprokwert der Phasensteilheit df/dØ gebildet wird und

— daß die Differenz der Reziprokwerte der Phasensteilheiten in der und gegen die Strömungsrichtung gebildet wird, wodurch sich ein von der Ultraschall-Ausbreitungsgeschwindigkeit unabhängiger Wert für die Bestimmung der Strömungsgeschwindigkeit ergibt.

2. Verfahren nach Anspruch 1, dadurch gekennzeichnet, daß lokale Störungen der Phasenkennlinie, die z.B. durch parasitäre Schallanteile, Resonanzeffekte der Wandler oder Nichtlinearitäten der Phasendetektoren entstehen können und die Meßgegnauigkeit herabsetzen können, durch Mittelung eliminiert werden.

3. Verfahren nach Anspruch 1, dadurch gekennzeichnet, daß lokale Störungen der Phasenkennlinie, die z.B. durch parasitäre Schallanteile, Resonanzeffekte der Wandler oder Nichtlinearitäten der Phasendetektoren entstehen können und die Meßgenauigkeit herabsetzen können, durch Ausgleichsverfahren eliminiert werden.

4. Verfahren zur Messung von Strömungsgeschwindigkeiten mit Ultraschallschwingungen, zu dessen Durchführung eine Vorrichtung vorgesehen ist, bei der eine erste und eine zweite aus je einem Sende- und je einem Empfangswandler bestehende Ultraschallmeßstrecke angeordnet sind und bei der sich jeweils eine zur Strömungsrichtung parallel orientierte Ausbreitungskomponente der Ultraschallschwingungen in Strömungsrichtung bzw. gegen die Strömungsrichtung einstellt, dadurch gekennzeichnet,

— daß die jeweiligen Sendesignale in einem für die Wandler und ihre Anordnung geeigneten Frequenzbereich repetierend frequenzmoduliert werden,

— daß fortlaufend die jeweiligen momentanen Werte der Sendefrequenz f und der dazugehörigen Empfangsphase φ gemessen werden,

— daß die Frequenzen für eine vorgegebene Phase, vorzugsweise φ = O, errechnet werden und

— daß die differenz dieser Frequenzen in der und gegen die Strömungsrichtung gebildet wird, wodurch sich ein von der Ultraschall-Ausbreitungsgeschwindigkeit unabhängiger Wert für die Bestimmung der Strömungsgeschwindigkeit ergibt.

## Revendications

1. Procédé pour mesurer des vitesses d'écoulement au moyen de vibrations ultrasonores, pour la mise en oeuvre duquel il est prévu un dispositif dans lequel sont prévues des première et seconde sections de mesure par ultrasons, constituées respectivement par un transducteur d'émission et respectivement par un transducteur de réception, et dans lequel une composante de propagation, orientée parallèlement à la direction d'écoulement, des vibrations ultrasonores s'établit respectivement dans la direction d'écoulement ou en sens opposé de cette direction, caractérisé par le fait

— qu'on module en fréquence, de façon répétitive, les signaux respectifs d'émission dans une plage de fréquences convenant pour les transducteurs et leur montage,

— qu'on mesure en permanence les valeurs instantanées respectives de la frèquence d'émission f et de la phase de réception φ qui lui est associée,

— qu'on forme, à partir des valeurs mesurées, l'inverse de la pente de la phase (df/dφ), et

— qu'on forme la différence des inverses des pentes de la phase dans la direction d'écoulement et dans la direction opposée, ce qui fournit une valeur, indépendante de la vitesse de propagation des ultrasons, pour la détermination de la vitesse d'écoulement.

2. Procédé suivant la revendication 1, caractérisé par le fait qu'on élimine, par formation de la moyenne, des perturbations locales de la courbe caractéristique de la phase, qui peuvent être dues par exemple à des composantes acoustiques parasites, des effets de résonance des transducteurs ou des non linéarités des détecteurs de phase et peuvent réduire la précision de mesure.

3. Procédé suivant la revendication 1, caractérisé par le fait qu'on élimine, au moyen d'un procédé de compensation, des perturbations locales de la courbe caractéristique de la phase, qui peuvent être dues par exemple à des composantes acoustiques parasites, des effets de résonance des transducteurs ou des non linéarités des détecteurs de phase et peuvent réduire la précision de mesure.

4. Procédé pour mesurer pour mesurer des vitesses d'écoulement au moyen de vibrations ultrasonores et pour la mise en oeuvre duquel il est prévu un dispositif dans lequel sont prévues des première et seconde sections de mesure par ultrasons, constituées respectivement par un transducteur d'émission et respectivement par un transducteur de réception, et dans lequel une composante de propagation, orientée parallèlement à la direction d'écoulement, des vibrations ultrasonores s'établit respectivement dans la direction d'écoulement ou en sens opposé de cette direction, caractérisé par le fait

— qu'on module en fréquence, de façon répétitive, les signaux respectifs d'émission dans une plage de fréquences convenant pour les transducteurs et leur montage,

— qu'on mesure en permanence les valeurs instantanées respectives de la fréquence d'émission f et de la phase de réception φ qui lui est associée,

— qu'on calcule les fréquences pour une phase prédéterminée, de préférence φ = O, et

— qu'on forme la différence des fréquences dans la direction d'écoulement et dans la direction opposée, ce qui fournit une valeur, indépendante de la vitesse de propagation des ultrasons, pour la détermination de la vitesse d'écoulement.

## Claims

1. Method for measuring flow velocities by means of ultrasonic vibrations, a device being provided to carry out said method in which there are arranged one first and one second ultrasonic measuring system, each comprising one transmitter transducer and one receiver transducer, and in which in each case a propagation component of the ultrasonic vibrations, oriented parallel with respect to the flow direction, is set in flow direction or against the flow direction, characterized
— in that the respective transmitted signals are repeatedly frequency-modulated in a frequency range suitable for the transducers and their arrangement,
— in that the respective instantaneous values of the transmit frequency f and of the associated receiving phase φ are continuously measured,
— in that the reciprocal value of the phase steepness df/dφ is formed from the measured values, and
— in that the difference between the reciprocal values of the phase steepnesses in the and against the flow direction is formed, thereby producing a value for determining the flow velocity which is independent of the ultrasonic propagation rate.

2. Method according to Claim 1, characterized in that local disturbances of the phase characteristic, which may arise, for example, as a result of parasitic sound contents, resonant effects of the transducers or non-linearities of the phase detectors, and may reduce the measuring precision, are eliminated by means of averaging.

3. Method according to Claim 1, characterized in that local disturbances of the phase characteristic, which may arise, for example, as a result of parasitic sound contents, resonant effects of the transducers or non-linearities of the phase detectors, and may reduce the measuring precision, are eliminated by means of equalizing methods.

4. Method for measuring flow velocities by means of ultrasonic vibrations, a device being provided to carry out said method in which there are arranged one first and one second ultrasonic measuring system, each comprising one transmitter transducer and one receiver transducer, and in which in each case one propagation component of the ultrasonic vibrations, oriented parallel with respect to the flow direction, is set in flow direction or against the flow direction, characterized
— in that the respective transmitted signals are repeatedly frequency-modulated in a frequency range suitable for the transducers and their arrangement,
— in that the respective instantaneous values of the transmit frequency f and of the associated receiving phase φ are continuously measured,
— in that the frequencies are calculated for a predefined phase, preferably φ = O, and
— in that the difference between these frequencies in the and against the flow direction is formed, thereby producing a value for determining the flow velocity which is independent of the ultrasonic propagation rate.

## FIG 1

## FIG 3

# FIG 2